# EUROPEAN PATENT APPLICATION

(11) **EP 1 107 100 A1**
(43) Date of publication of application: **13.06.2001**
(21) Application number: 00119938.9
(22) Date of filing: 13.09.2000
(51) Int. Cl.: G06F 3/033

(54) **Method and apparatus for selecting a software item using a graphical user interface**

(30) Priority: 02.12.1999 SE 9904380
(71) Applicant: Siemens-Elema AB, 171 95 Solna 1 (SE)
(72) Inventor: Gustafsson, Ulla, 144 32 Rönninge (SE)

(57) **Abstract**

A method of permitting a user selection of a Software Item, from a computer accessible collection of Software Items employs suitably configured computer hardware to perform the steps of:
a) providing a graphical user interface (12) on a computer display as a preferably globate grid (13) having a plurality of grid lines (14,15) and a corresponding plurality of Identifiers (16-22), each being in visual correspondance with a different grid-line, and wherein the grid-lines intersect at grid nodes (23), each one of which being associated with a link to a Software Item related to the Identifiers (21,18) of the intersected lines and locatable by an underlying computer program using the associated link;
b) registering a user selection of one or more grid nodes (23); and
c) processing within the underlying computer program the link associated with each of the one or more grid nodes (23) of the registered user selection to locate the Software Item.

## Description

The present invention relates to a graphical user interface (GUI) and in particular to a method and apparatus for selecting a Software Item from a collection of Software Items using the GUI.

As used herein the term "Software Item" shall mean a piece of data, for example the contents of a database field or an Internet web page, which when processed by a computer program provides a sensible (i.e. detected by sight or sound) output conveying information to a user; or a piece of software coding, for example a program sub-routine or an executable program, which when run causes a computer system to perform in a particular manner; and the term "Identifier" shall mean a visual prompt which when displayed on a computer screen provides to a user a graphical metaphor for the type, the content or the function of a Software Item.

The use of computers to access and retrieve items of information from data collections is ever increasing. Particularly commercially interesting is the use of computers by consumers to access product information which is increasingly provided via the Internet or via product catalogue databases, supplied for example on CD-ROM. The ease with which a user can locate a relevant item of information will inevitably influence the user's interest in seeking product information, possibly the user's perception of the manufacturer and product and even a user's purchase decision. It is therefore particularly important to provide a user with access to relevant product information in a rapid and intuitive manner.

Graphical User Interfaces (GUIs) are well known mechanisms by which users can interact with computers using Identifiers, such as icons or labels, for desired operations. It is known to provide a GUI having Identifiers in the form of icon images of products within a product range, sometimes even set against a background depicting the physical operating environment of those products. In the medical field, for example, icon images of intensive care equipment available from a manufacturer may be displayed in their correct positions relative to a background depicting an intensive care room or operating theatre. Selecting an icon, for example by using a computer mouse or other known pointing device, will typically reveal a second tier of the interface, for example a scroll-menu listing, showing what information is available for user selection and subsequent viewing. The user is then required to make a further selection from this menu, for example again by using a computer mouse, before the information of the selected Software Item is displayed. With this type of GUI a user cannot see more than one tier of the interface at a time and cannot see if an analogous Software Item associated with one product is available for another product within the displayed, iconised product range. Moreover, in order to select a Software Item at least two user selections are required.

According to a first aspect of the present invention there is provided a method of permitting user selection of a Software Item from a computer accessible collection of Software Items by means of a GUI in the form of a grid in which each grid line forming the grid is visually related to its own Identifier. Each grid node, or a collection of grid nodes, is associated with a link to a unique Software Item, such as the contents of a database record field or an Internet Web page, represented by Identifiers of the intersecting grid lines forming the node. These links are processable by an underlying program to retrieve the associated Software Items.

In this manner the available Software Items are intuitively accessible through a visual correlation Identifiers, guided by the grid lines, and can be selected in only one user operation through the selection of a grid node.

In one embodiment the grid lines are divided into two sets with each line of one set disposed to intersect the lines of the other set only once and with the two sets mutually arranged in a flat or a globate grid to provide links to Software Items identified by two Identifiers.

According to a second aspect of the present invention there is provided a computer program product loadable into a computer memory and comprises software code portions adapted to cause the performance by the computer of the method according to the first aspect of the present invention.

Exemplary embodiments of the present invention will be described with reference to the drawings of the accompanying figures, of which:
Fig. 1 shows an example of a grid GUI for operation according to principles of the method of the present invention.
Fig. 2 shows a further example of a grid GUI for operation according to principles of the method of the present invention.
Fig. 3 shows an operational flow diagram of a computer programmed with software code portions of a program product according to the present invention.
Fig.4 shows a further example of a grid GUI for operation according to principles of the method of the present invention to select program code Software Items.

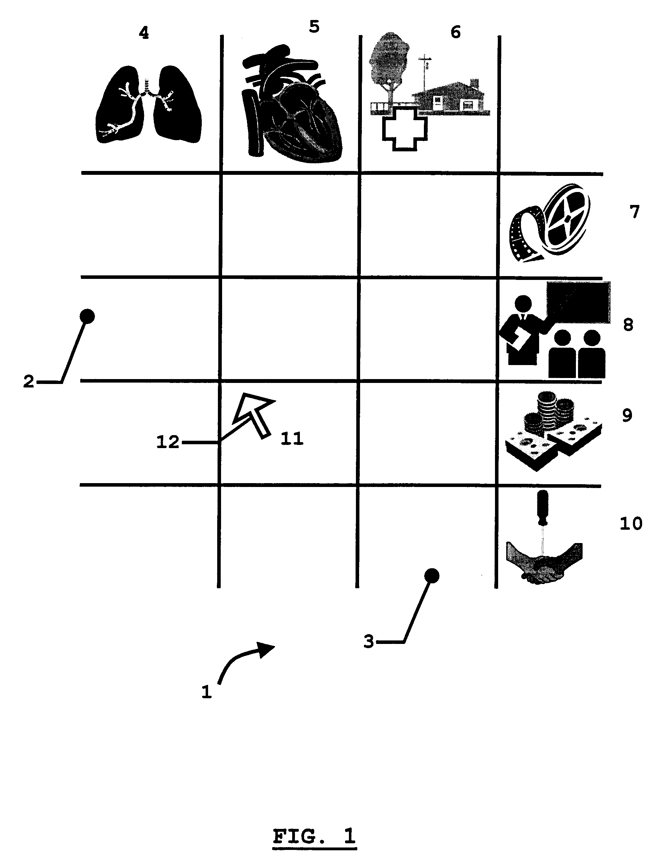

Considering now Fig. 1, a flat grid GUI 1 of a computer system is shown for a collection of Software Items providing information on a medical product range. This collection may be available remotely at a manufacturer's Internet web-site, locally in a database supplied to a potential customer and recorded on a computer readable medium, or a combination of the two. The grid is defined by an intersecting arrangement of a horizontal set 2 and vertical set 3 of grid lines and has arranged about its periphery icons 4-10 as graphical Identifiers associated with each of the grid lines. In this particular example the icons 4-6 of the vertical set 2 of grid lines indicate product type and the icons 7-10 of the horizontal set 3 of grid lines indicate information type. It can be seen from the Fig. 1 that here a user can access Software Items concerning animated presentations (icon 7); training requirements (icon 8); costs (icon 9) and service/maintenance provisions (icon 10) for ventilators/anaesthesia machines (icon 4); heart monitors (icon 5) and home care systems (icon 6). In this manner the user is presented with a visual overview of the information available for selection. A Software Item, for example regarding the costs 8 for the heart monitoring systems 5, can also be intiutively selected in a single operation by selecting the appropriate intersection of the associated grid lines, that is to say node 11. The user may conveniently make a selection by dragging a cursor 12 to an area of the computer screen defined by a desired grid node using a known user interface such as computer keyboard cursor keys, a touch screen or a computer mouse and then confirming a selection, by for example clicking a mouse button or pressing "ENTER" on the computer keyboard.

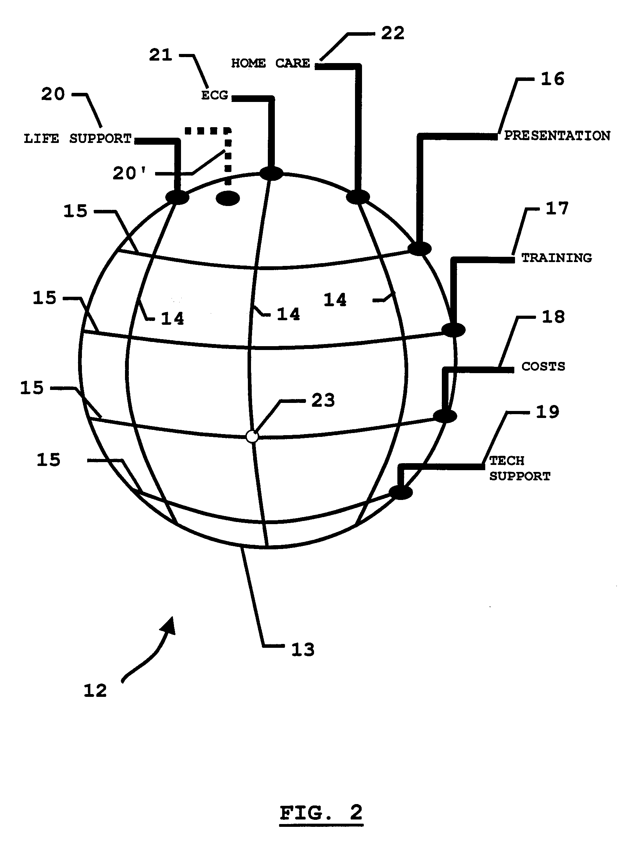

The GUI has associated with this node (and indeed every node) a link which, in the case of Internet accessible information, is processable by the user's web browser program, such as the commercially available Netscape™ Navigator or Microsoft™ Explorer, to locate the selected Software Item and present its information for the user. Optionally the GUI may be adapted to permit multiple node selections so that groups of Software Items may be located and the information displayed to a user. Additionally or alternatively multiple node combinations may also have associated with them a unique link in the manner of the single nodes discussed above. Selection of all grid nodes down a column or along a row may be facilitated by selecting the appropriate icon 4,5 or 6 and 7,8,9 or 10 respectively. The information corresponding to each Software Item associated with each node of the row or column may be then displayed at once. Alternatively a new piece of information corresponding to a Software Item identified by a link associated with the particular combination of selected nodes may be displayed. The underlying link may be an indirect link to a Software Item, in that selection of a grid node presents the user with a second tier selection such as a further GUI as described above for Fig. 1 or below for Fig. 2 containing appropriate iconised Identifiers or even a scroll menu.

Considering now Fig. 2, an alternative computer GUI 12 is shown which may be substituted for that of Fig. 1 and which is, for illustrative purposes, adapted to provide user access to the same Software Items and in the same manner as described with respect to Fig. 1. The grid 13 is here arranged to represent a globe with grid lines associated with product type represented by lines of longitude 14 and grid lines associated with information type represented by lines of latitude 15. Textual labels 16-22 are provided as Identifiers which here indicate that a user has access to Software Items concerning animated presentations ("PRESENTATION" 16); training requirements ("TRAINING" 17); costs ("COSTS" 18) and service/maintenance provisions ("TECH SUPPORT" 19) for the products ventilators/anaesthesia machines ("LIFE SUPPORT" 20); heart monitors ("ECG" 21) and home care systems ("HOME CARE" 22). The arrangement of the Identifiers 16-22 leads a user to intuitively select an intersection of two grid lines in order to access a Software Item related to the combination of Identifiers made by the intersecting lines, for example the selection of the node 23 provides user access to cost information for heart monitors through a link processable by an underlying program.

It will be appreciated by those skilled in the art that Identifiers of the GUIs of Figs. 1 and 2 may be interchanged without departing from the invention. For example the textual labels 16-22 of Figure 2 may be exchanged or mixed with the icons 4-10 of Figure 1 or the large area grid nodes 11 of

Figure 1 may be exchanged with the point nodes 23 of Figure 2 simply by shifting the visual link between Identifier and grid line (as shown by the broken line 20' of Figure 2).

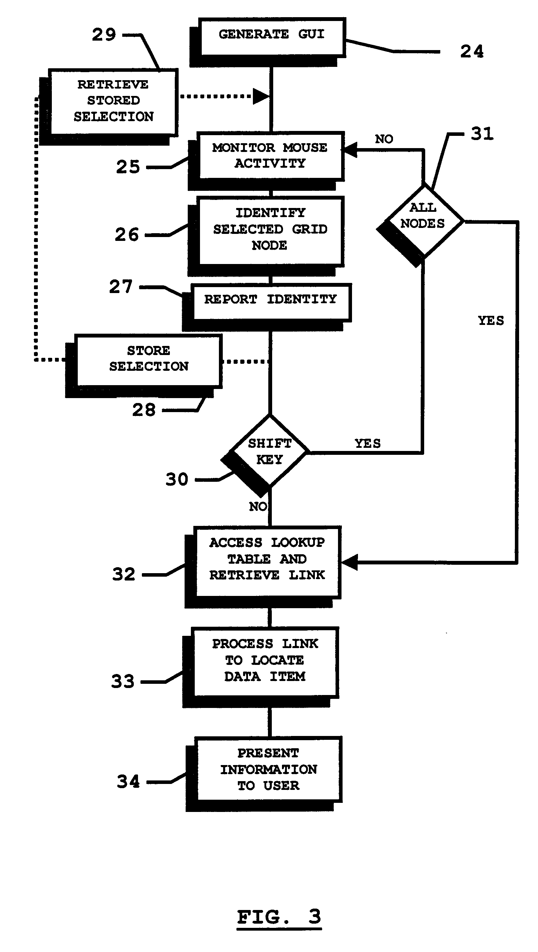

In order to adapt a general purpose computer system to perform the steps of the method of the present invention software code is provided which is loaded into and processed by the computer system to thereby modify its behaviour. The flow chart of Fig. 3 provides an overview of the operational steps implemented on the computer system when running the software code. A GUI 1 or 12 is generated on a computer display (step 24) as described above with respect to Figs. 1 or 2 and mouse activity of a user is monitored (step 25). During this step 25 movements of the mouse are translated to related movements of a cursor on the display and mouse button activity is continuously monitored for a user activation or "click" indicating a user selection of a grid node of the GUI 1,12. When the click is registered the location of the cursor on the screen is identified and compared with the locations of the grid nodes. If the cursor lies within a grid node (e.g. node 11 of Fig. 1) or within a predetermined number of pixels of a node (e.g. node 23 of Fig. 2) then an identification of a selected grid node is made (step 26).

Usefully, the identification of a node is reported to the user (step 27) such as by highlighting the area of the display corresponding to the identified node. This step 27 may be refined to alternately apply and remove the highlighting in correspondance with consecutive selections of the same node. Moreover, it may be useful to record and store identified grid nodes (step 28) for subsequent retrieval (step 29) and reporting (step 27). This serves as a reminder of nodes already 'visited' by the user. This may be particularly usefully employed between one user session and the next session.

If detection (step 30) of a depression of a designated computer keyboard key, such as the "SHIFT" key, is made during the click then the steps of monitoring 25, of identifying 26 and of reporting 27 are repeated until either all of the nodes are selected (step 31) or the SHIFT key is released (step 30). Links to Software Items are identified and retrieved (step 32) for all selected nodes and/or combinations using a lookup table accessible to the computer (e.g. stored within the internal memory of a computer). Such a lookup table could comprise an index of hypertext links, one for each node or group of nodes, or could comprise an index of pointers, each one to a different data field of a database record, and each identifiable by a different associated node.

The retrieved links are then processed within the computer to locate the Software Item and access the information contents of that item (step 33) for subsequent display or other presentation (if in audio format for example) of the information (step 34) to the user.

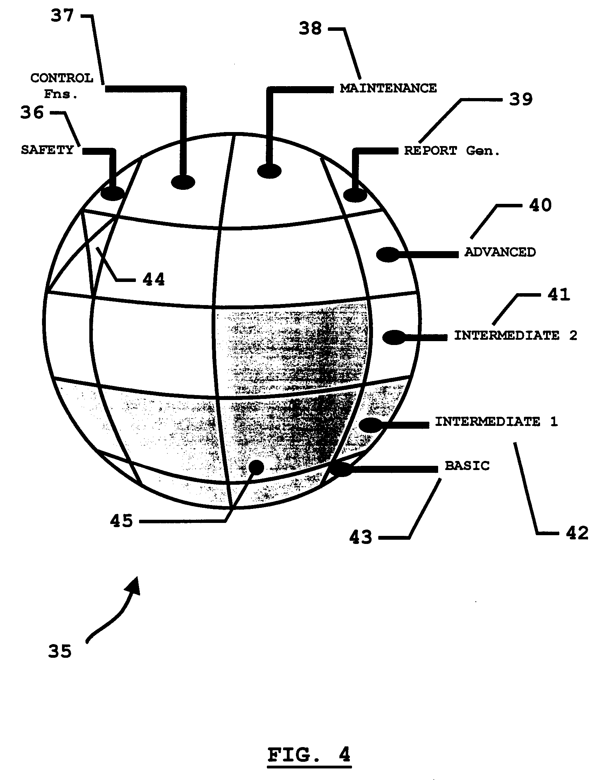

Turning now to Fig. 4 a globate GUI 35 is shown for use in selecting program code Software Information in a particular example of equipment user training. Each grid-line of a first set of grid-lines has associated with it an Identifier 36-39 indicating a different training area. A second set of grid-lines has associated with each member line an Identifier 10-43 indicating a different stage of training. Thus a user can readily see from the GUI 35 that computer based training relating to patient safety "SAFETY" 36, equipment operation "CONTROL Fns." 37, installation and maintenance "MAINTENANCE" 38 and data manipulation "REPORT Gen" 39 can be provided in four stages, "ADVANCED" 40, "INTERMEDIATE" 41,42 and "BASIC" 43, simply by selecting a particular node, such as the highlighted node 44 (Advanced patient safety training) . Previous node selections (shown generally at 45) are differentiated on the GUI 35, for example by "dimming" the associated regions of the computer display, to remind the user of training Software Items already taken and the underlying program may be adapted to ignore a user selection of these. In this example the underlying program code which generates and controls the GUI will, in common with that shown in Fig. 3, include the steps of retrieving 32 and processing 33 a link to a Software Item which is associated with the selected node 44. In this case however, the Software Item is a piece of program coding so that the information presentation step 34 of Fig. 3 will be replaced by a step of running the relevant piece of program coding which modifies the computer system operating the GUI 35 to run a selected training program such as is common to computer based training.

It will be appreciated by those skilled in the art that the software code implementing the method of the present invention may be written so that the steps are divided between computers of a computer system that are local to and remote from the user as is necessary without departing from the invention as claimed. This may be the case in applications where a personal computer is employed by a user at a local site to access via the Internet information or program code that is stored on one or more servers at remote sites.

## Claims

1. A method of permitting a user selection of a Software Item, being a piece of data which when processed by a computer program provides a sensibleoutput conveying information to a user or a piece of software coding which when run causes a computer system to perform in a particular manner, from a computer accessible collection of Software Items comprising the steps of:
a) (24) providing a graphical user interface (1;12;35) on a computer display as a grid (13) having a plurality of grid lines (2,3;14,15) and a corresponding plurality of Identifiers (4-10;16-22;36-43), being a visual prompt which when displayed on a computer display provides to a user a graphical metaphor for the type, the content or the function of a Software Item, each Identifier being in visual correspondance with a different grid-line, and wherein the grid-lines intersect at grid nodes (11;23;44), each one of which being associated with a link to a Software Item related to the Identifiers (5,9;21,18;36,40) of the intersected lines and locatable by an underlying computer program using the associated link;
b) (25,26) registering a user selection of one or more grid nodes (11;23;44); and
c) (32,33) processing within the underlying computer program the link associated with each of the one or more grid nodes (11;23;44) of the registered user selection to locate the Software Item.

2. A method as claimed in Claim 1 **characterised in that** the grid is provided as two sets (2,3,14,15) of spaced apart grid lines arranged with the grid lines of one set (2;14) intersecting each of the other set (3;15) only once to provide a grid node (11;23) visually representing the Software Item by reference to the Identifiers (5,9;21,18) associated with the two intersecting grid lines.

3. A method as claimed in claim 2 **characterised in that** the grid representation is globate (12;35) having the two sets of circumferentially spaced apart grid-lines (14,15), one set disposed substantially perpendicular to the other.

4. A method as claimed in any of the claims 1 to 3 **characterised in that** step a) comprises providing a grid the grid lines of which consist of a first set of a plurality of lines each of which represents a different database record of a collection of records and of a second set of a plurality of lines each of which represents a different record fields and the grid nodes of which are associated with a link to the contents of a unique record field identified by the intersection of a grid line of the first set with a grid line of the second set.

5. A method as claimed in any of the claims 1 to 4 **characterised in that** step a) comprises providing a grid (1;13) one or more nodes of which being associated with a link to a Software Item accessible via the Internet using a browser program.

6. A method as claimed in any of the claims 1 to 4 **characterised in that** step a) comprises providing a grid (35) one or more nodes of which being associated with a link to a Software Item comprising program coding portions.

7. A method as claimed in any preceding claim **characterised in that** there is provided a step (27) of visibly identifying a previously selected grid node (45) on the graphical user interface (35) displayed on the computer display.

8. A computer program product loadable into a memory of a computer system comprising software code portions adapted to cause the performance by the computer system of the steps of a one of the preceding Claims when the product is run thereon.
